# FASCICULE DE BREVET EUROPEEN

(11) **EP 2 421 214 B1**
(45) Date de publication et mention de la délivrance du brevet: **29.05.2013**
(21) Numéro de dépôt: 10173249.3
(22) Date de dépôt: 18.08.2010
(51) Int. Cl.: H04L 27/152

(54) **Récepteur de signaux radiofréquences FSK à faible débit et à conversion directe**
Empfänger für FSK-Funksignale mit geringem Durchsatz und direkter Umwandlung
Direct-conversion, low-rate FSK radiofrequency signal receiver

(43) Date de publication de la demande: 22.02.2012
(73) Titulaire: The Swatch Group Research and Development Ltd., 2074 Marin (CH)
(72) Inventeur: Casagrande, Arnaud, 2014, Bôle (CH)
(74) Mandataire: Giraud, Eric

(56) Documents cités:
- WO-A1-2006/055403
- WO-A1-2009/066558
- JP-A- 2003 333 116
- US-A- 4 321 549

## Description

L'invention concerne un récepteur de signaux radiofréquences à modulation FSK à faible débit et à conversion directe.

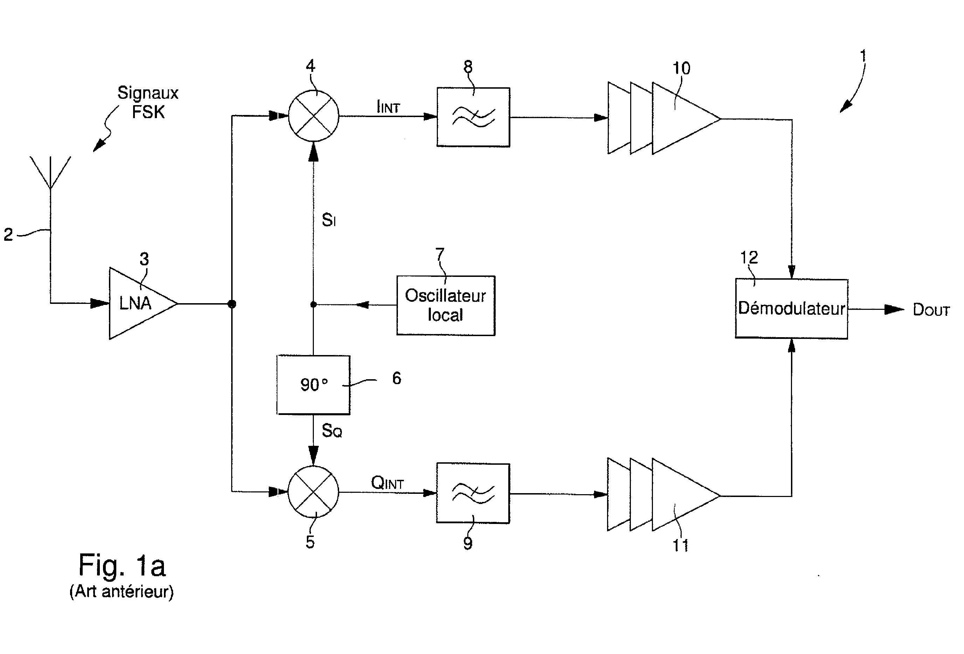

Dans un récepteur 1 de signaux radiofréquences à modulation FSK traditionnel, comme représenté à la figure 1a, il peut être opéré une conversion directe en fréquence dans deux branches distinctes en quadrature pour obtenir des signaux en bande de base. Chaque branche comprend un mélangeur 4, 5 pour effectuer la conversion de fréquence avec des signaux oscillants fournis par un oscillateur local 7. Dans une première branche, un premier mélangeur à haute fréquence 4 permet de mélanger les signaux FSK, captés par l'antenne 2 et amplifiés par l'amplificateur LNA 3 du récepteur, avec des signaux oscillants en phase S₁ pour fournir des signaux intermédiaires en phase I_{INT}. Dans une seconde branche, un second mélangeur à haute fréquence 5 permet de mélanger les signaux FSK, captés par l'antenne 2 et amplifiés par l'amplificateur LNA 3, avec des signaux oscillants en quadrature S_{Q} pour fournir des signaux intermédiaires en quadrature Q_{INT}. Ces signaux oscillants en quadrature sont obtenus par un déphaseur de 90° 6 relié à l'oscillateur local 7. Les signaux intermédiaires I_{INT} et Q_{INT} sont ensuite filtrés chacun dans un filtre passe-bas respectif 8 et 9 pour fournir des signaux filtrés. Les signaux filtrés passent encore chacun par un limiteur respectif 10 et 11 avant une démodulation des données dans le démodulateur 12 traditionnel, qui fournit les signaux de données D_{OUT}. Les deux signaux intermédiaires en phase I_{INT} et en quadrature Q_{INT} sont nécessaires pour l'étage de démodulation afin de discriminer le signe de la déviation de fréquence des signaux FSK captés et déterminer les données des signaux FSK captés.

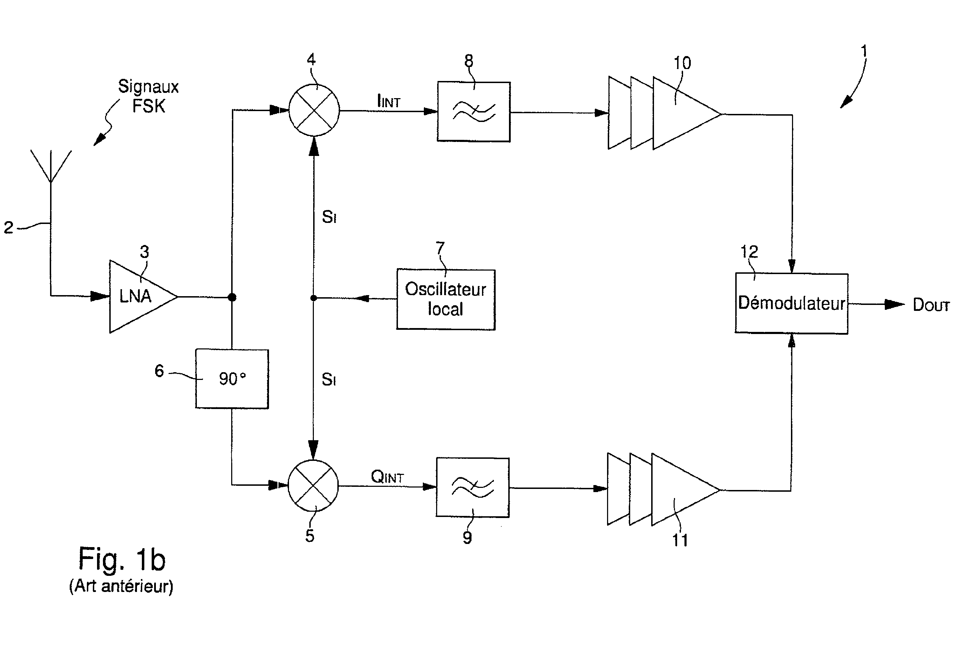

Selon une autre variante de réalisation d'un récepteur 1 de signaux radiofréquences FSK traditionnel représenté à la figure 1b, il peut être prévu un déphaseur de 90° 6 dans une des branches avant la conversion de fréquence. Les signaux radiofréquences FSK sont mélangés d'une part dans le premier mélangeur à haute fréquence 4 par les signaux oscillants S₁ fournis par l'oscillateur local 7 afin de fournir des signaux intermédiaires en phase I_{INT}. Les signaux radiofréquences FSK déphasés de 90° par le déphaseur 6 sont mélangés d'autre part dans le second mélangeur à haute fréquence 5 par les mêmes signaux oscillants S₁ de l'oscillateur local 7 afin de fournir les signaux intermédiaires en quadrature Q_{INT}.

Selon les première et seconde variantes indiquées ci-devant en référence aux figures 1a et 1b, le récepteur 1 peut être capable de capter des signaux radiofréquences FSK traditionnel, qui peuvent avoir une fréquence porteuse f₀ de l'ordre de 2.45 GHz. Une déviation ou écart de fréquence de modulation des données +Δf ou -Δf autour de f₀ peut être de l'ordre de ±250 kHz, ou inférieure. Comme une conversion directe à haute fréquence est opérée dans les deux mélangeurs 4 et 5, suivie par un filtrage dans deux filtres passe-bas et d'une limitation d'amplitude dans deux limiteurs, une forte consommation électrique du récepteur est constatée, ce qui constitue un inconvénient.

Pour éviter l'emploi de deux mélangeurs lors de la conversion directe à haute fréquence des signaux radiofréquences captés, on peut citer le brevet US 5,293,408, qui décrit un récepteur de signaux de données du type FSK. Ce récepteur ne comprend qu'un seul mélangeur pour effectuer une conversion directe des signaux FSK captés en des signaux en bande de base. Pour ce faire, selon une première variante, des signaux oscillants d'un oscillateur local sont fournis à l'unique mélangeur par l'intermédiaire d'un circuit de contrôle de phase, qui agit alternativement lors d'une commutation de phase, comme un déphaseur de 90°. Le circuit de contrôle de phase permet de fournir alternativement dans le temps des signaux oscillants en phase et des signaux oscillants en quadrature à l'unique mélangeur pour convertir en fréquence les signaux radiofréquences FSK captés par l'antenne du récepteur. Les signaux intermédiaires fournis par le mélangeur sont donc une succession alternative de signaux intermédiaires en phase et de signaux intermédiaires en quadrature. Ces signaux intermédiaires sont filtrés dans un filtre passe-bas avant une opération de démodulation des données.

Selon une seconde variante du récepteur de signaux radiofréquences FSK, le circuit de contrôle de phase, qui agit alternativement lors d'une commutation de phase, comme un déphaseur de 90°, est disposé entre l'antenne du récepteur et l'unique mélangeur. Ce circuit de contrôle de phase fournit alternativement dans le temps des signaux radiofréquences FSK en phase et des signaux radiofréquences FSK en quadrature au mélangeur. L'oscillateur local fournit directement des signaux oscillants au mélangeur pour qu'il fournisse des signaux intermédiaires successivement en phase et en quadrature. Ces signaux intermédiaires sont aussi filtrés par un filtre passe-bas avant une opération de démodulation des données.

Dans le récepteur de signaux FSK du brevet US 5,293,408, la commutation entre les signaux en phase et les signaux en quadrature par le circuit de contrôle de phase est effectuée de manière très abrupte. Cela conduit à des fréquences élevées. Dans ces conditions, il est nécessaire d'avoir à la suite de l'unique mélangeur, un filtre passe-bas à très grande largeur de bande comme une commutation très rapide est souhaitée, ce qui constitue un inconvénient. Cela conduit également ce récepteur de signaux FSK à une mauvaise sensibilité pratique et mauvaise efficacité de canal de réception, tout en étant gourmand en consommation électrique. Ce récepteur ne peut être utilisé que pour une commande d'appareils dans un endroit précis, mais pas dans un univers de communications avec plusieurs canaux de transmission et réception. De plus, le circuit de contrôle de phase pour passer des signaux en phase aux signaux en quadrature et réciproquement, est directement commandé sur la base de premiers signaux en bande de base à la sortie du filtre passe-bas. Une commutation à flanc très raide est opérée d'une phase à l'autre, ce qui exige d'utiliser des éléments à retard. Ainsi toutes les fréquences parasites à la fréquence centrale passent par le filtre de manière à maintenir une rapide commutation entre les phases. Ces fréquences parasites peuvent être même supérieures à la fréquence des signaux radiofréquences captés, ce qui induit une forte consommation dans l'étage d'entrée du récepteur.

On peut citer également le brevet US 6,038,268, qui décrit un récepteur de signaux radiofréquences FSK. Dans ce récepteur, il est également utilisé un unique mélangeur pour opérer la conversion de fréquence des signaux radiofréquences en des signaux en bande de base. Un circuit de contrôle de phase est prévu en sortie de l'oscillateur local pour fournir des signaux en phase ou en quadrature au mélangeur. Un générateur de commande à impulsions est prévu pour cadencer le circuit de contrôle de phase en sortie de l'oscillateur local. Comme pour le précédent document, le premier filtre passe-bas à la sortie du mélangeur a une grande largeur de bande étant donné que la commutation de phase doit être également très rapide. Ceci constitue un inconvénient, car il doit encore être prévu des seconds filtres passe-bas à largeur de bande étroite avant l'étage de démodulation des données pour retirer toutes les fréquences parasites, qui n'ont pas été filtrées par le premier filtre passe-bas. Une consommation importante dans l'étage d'entrée, notamment du circuit de contrôle de phase, est ainsi constatée, et des éléments supplémentaires sont prévus entre la conversion de fréquence et la démodulation des données, ce qui constitue un autre inconvénient.

Le document JP 2003 333 116 décrit un récepteur de signaux de données du type FSK. Le récepteur est agencé pour qu'un circuit déphaseur soit commuté par un signal de sélection de phase à une fréquence du cycle de commutation de phase supérieure à la fréquence du débit des données.

L'invention a donc pour but de fournir un récepteur de signaux radiofréquences à modulation FSK à conversion directe, qui possède une grande sensibilité dans un mode à faible débit et avec une faible consommation électrique, pour pallier les inconvénients susmentionnés de l'état de la technique.

A cet effet, l'invention concerne un récepteur de signaux radiofréquences FSK, qui comprend les caractéristiques mentionnées dans la revendication indépendante 1.

Des formes d'exécution particulières du récepteur sont définies dans les revendications dépendantes 2 à 14.

Un avantage d'un tel récepteur de signaux radiofréquences à modulation FSK des données selon l'invention réside dans le fait que la commutation de phase est effectuée à une faible fréquence comparativement à la déviation de fréquence de modulation des données dans les signaux radiofréquences FSK captés. Par contre, la fréquence de commutation de phase est plus grande que la fréquence du débit de données dans lesdits signaux radiofréquences FSK. La déviation de fréquence de modulation des données est donc beaucoup plus grande que le faible débit des données à démoduler des signaux intermédiaires, ce qui garantit qu'un filtre passe-bas à bande étroite peut être utilisé. Grâce à cette commutation de phase à faible fréquence du récepteur de signaux FSK et à l'unique mélangeur pour la conversion de fréquence, la consommation électrique du récepteur est fortement réduite. Cette commutation de phase beaucoup plus lente ne pénalise également pas la démodulation des données dans l'étage de démodulation.

Un autre avantage du récepteur de signaux radiofréquences FSK selon l'invention réside dans le fait que dans l'étage de démodulation, une reconstruction dans chaque branche des signaux intermédiaires sélectionnés en phase et en quadrature est effectuée lors de la sélection de l'autre branche pour faciliter une opération de démodulation dans le démodulateur.

Les buts, avantages et caractéristiques du récepteur de signaux radiofréquences FSK apparaîtront mieux dans la description suivante sur la base de formes d'exécution non limitatives illustrées par les dessins sur lesquels :
les figures 1a et 1b déjà citées représentent de manière simplifiée deux formes d'exécution d'un récepteur de signaux radiofréquences FSK selon l'art antérieur,
les figures 2a et 2b représentent de manière simplifiée deux formes d'exécution d'un récepteur de signaux radiofréquences FSK à conversion directe et à faible débit selon l'invention,
la figure 3 représente un graphique temporel des signaux intermédiaires en phase et en quadrature avec le signal de sélection de phase à travers l'étage de démodulation du récepteur de signaux radiofréquences FSK selon l'invention,
la figure 4a représente une première forme d'exécution simplifiée d'un synthétiseur de fréquence par synthèse sigma-delta, qui constitue l'oscillateur local avec le circuit déphaseur intégré du récepteur de signaux radiofréquences FSK de la figure 2a,
la figure 4b représente deux graphiques temporels illustrant la commutation de phase par l'intermédiaire d'une programmation de fréquence par mot binaire fourni au modulateur sigma-delta du synthétiseur de la figure 4a pour le récepteur de signaux radiofréquences FSK de la figure 2a,
la figure 5 représente une seconde forme d'exécution simplifiée d'un synthétiseur de fréquence à deux ensembles à retard commutables, qui constitue l'oscillateur local avec le circuit déphaseur intégré du récepteur de signaux radiofréquences FSK de la figure 2a,
la figure 6 représente une troisième forme d'exécution simplifiée d'un synthétiseur de fréquence à deux ensembles à retard commutables, qui constitue l'oscillateur local avec le circuit déphaseur intégré du récepteur de signaux radiofréquences FSK de la figure 2a, et
la figure 7 représente une forme d'exécution d'un circuit déphaseur, qui est disposé en entrée du récepteur de signaux radiofréquences FSK selon la figure 2b.

Dans la description suivante, tous les composants du récepteur de signaux radiofréquences à modulation de fréquence (FSK), qui sont bien connus d'un homme du métier dans ce domaine technique, ne sont décrits que de manière simplifiée. Ledit récepteur de signaux radiofréquences FSK est principalement prévu pour opérer une conversion directe des signaux radiofréquences à faible débit de données en des signaux en bande de base par un unique mélangeur.

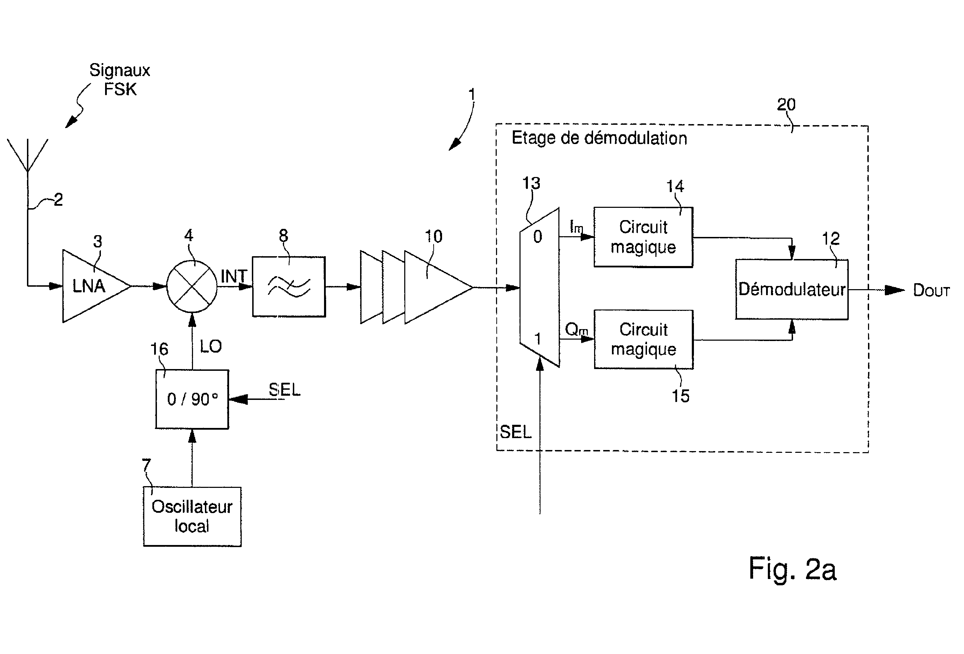

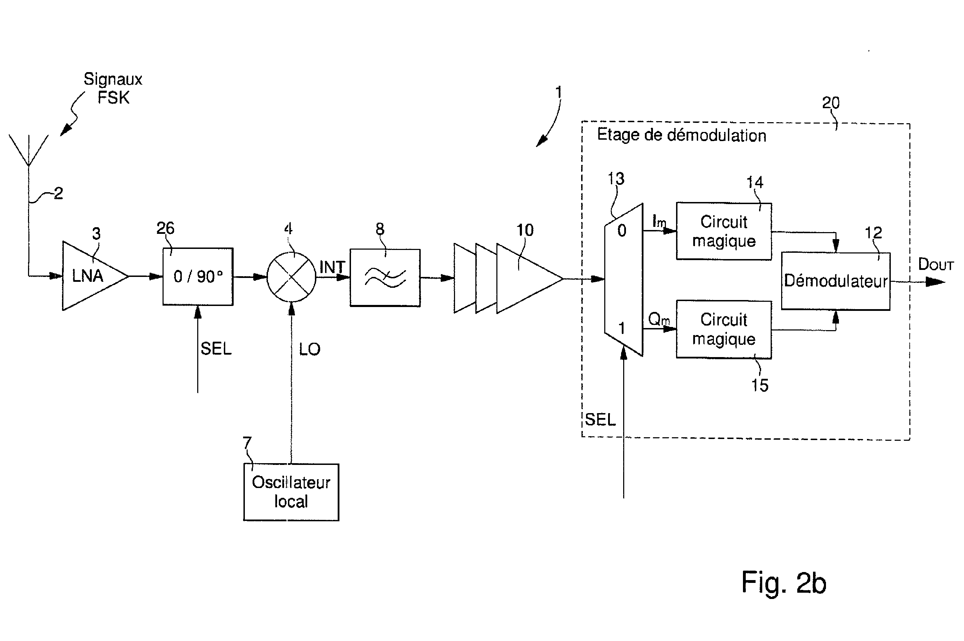

Le récepteur de signaux radiofréquences FSK 1, représenté aux figures 2a et 2b, est configuré pour pouvoir fonctionner dans un mode de réception de données ou commandes à faible débit. Ce débit de données ou commandes modulées dans les signaux FSK est ainsi inférieur à 10 kbits/s, par exemple de l'ordre de 1 kbits/s. Dans ces conditions, la puissance des signaux radiofréquences captés par une antenne 2 du récepteur 1 est généralement concentrée au niveau de la déviation ou écart de fréquence de modulation Δf (positive et négative) par rapport à la fréquence porteuse f₀ des signaux FSK. Cette fréquence porteuse f₀ peut être supérieure à 300 MHz, par exemple de l'ordre de 2.45 GHz. L'écart ou déviation de fréquence de modulation doit être en principe assez grand, par exemple plus grand ou égal à 100 kHz, de préférence à 250 kHz, pour ne pas être influencé par le bruit 1/f important proche de 0 Hz après conversion de fréquence. Généralement dans la modulation de fréquence des signaux captés, un état "1" de modulation est défini par l'addition de la fréquence porteuse f₀ et de la déviation de fréquence de modulation Δf, ce qui donne f₀+Δf, alors qu'un état "0" de modulation est défini par la déviation de fréquence de modulation Δf soustraite de la fréquence porteuse f₀, ce qui donne f₀-Δf. Bien entendu, il pourrait être imaginé également que l'état "0" de modulation soit défini comme la fréquence porteuse f₀, même si la modulation de données à f₀+Δf et f₀-Δf est préférée.

La première variante de réalisation du récepteur de signaux radiofréquences FSK 1 est représentée à la figure 2a. Le récepteur de cette figure 2a, comprend tout d'abord, une antenne 2 de réception de signaux radiofréquences FSK et un amplificateur du type LNA 3 pour amplifier et filtrer de manière traditionnelle les signaux FSK. Le récepteur comprend encore un oscillateur local 7 pour fournir des signaux oscillants LO à un circuit déphaseur 16. Les signaux oscillants LO sont générés avec une fréquence équivalente à la fréquence porteuse f₀ des signaux FSK captés. Le circuit déphaseur 16 est commandé par un signal de sélection de phase SEL pour pouvoir opérer un déphasage de 0° à 90° ou inversement des signaux oscillants LO fournis par l'oscillateur local 7, dans chaque demi-période d'un cycle de commutation 1/fs. Ceci permet de fournir à un unique mélangeur 4 alternativement des signaux oscillants en phase et des signaux oscillants en quadrature, qui sont déphasés de 90° par rapport aux signaux oscillants en phase.

Les signaux oscillants en phase sont par exemple fournis quand le signal SEL est dans un état "0", alors que les signaux oscillants en quadrature sont par exemple fournis quand le signal SEL est dans un état "1 ". Cependant, l'inverse de la sélection par le signal SEL peut aussi être envisagé. La fréquence du cycle de commutation de phase fs est prévue pour être plus petite que la déviation de fréquence Δf, mais par contre plus grande que la fréquence du débit D des données modulées dans les signaux radiofréquences FSK. Cette fréquence du cycle de commutation fs peut être définie 10 à 20 fois inférieure à la déviation de fréquence Δf, par exemple entre 10 et 25 kHz, alors que la déviation de fréquence Δf peut être entre 100 et 250 kHz. La fréquence du cycle de commutation de phase fs est par contre 10 à 20 fois supérieure à la fréquence du débit des données D par exemple à 1 kbits/s.

Une conversion de fréquence des signaux FSK captés est ainsi opérée dans le mélangeur 4 par les signaux oscillants de manière à fournir des signaux intermédiaires en bande de base INT. Comme les signaux oscillants LO, qui sont fournis au mélangeur 4 sont alternativement et successivement des signaux oscillants en phase et des signaux oscillants en quadrature, les signaux intermédiaires INT produits en sortie de l'unique mélangeur 4 sont alternativement et successivement des signaux intermédiaires en phase et des signaux intermédiaires en quadrature.

Ces signaux intermédiaires INT sont ensuite filtrés par un filtre passe-bas 8, qui peut être à faible largeur de bande étant donné que le récepteur 1 est configuré pour recevoir des signaux radiofréquences FSK à faible débit et que la fréquence de commutation de phase est avantageusement faible. Les signaux intermédiaires INT filtrés sont encore amplifiés dans un limiteur d'amplitude 10 avant d'entrer dans un étage de démodulation 20. Sur la base des signaux intermédiaires filtrés et amplifiés, cet étage de démodulation est à même de fournir après démodulation des signaux de données D_{OUT} en sortie. Ces signaux de données D_{OUT} sont directement utilisables par une unité de traitement non représentée, par exemple pour la commande de fonctions d'un instrument dans lequel est placé le récepteur.

L'étage de démodulation 20 comprend en entrée un démultiplexeur 13, qui reçoit les signaux intermédiaires INT filtrés et amplifiés. Ce démultiplexeur 13 est commandé par le signal de sélection de phase SEL de manière à fournir à une première sortie les signaux intermédiaires sélectionnés en phase Im, quand le signal SEL est à l'état "0", et à une seconde sortie les signaux intermédiaires sélectionnés en quadrature Qm, quand le signal SEL est à l'état "1". Comme la commutation de phase est effectuée relativement lentement à une fréquence du cycle de commutation fs par exemple égale à 10 kHz, cela n'induit pas de hautes fréquences parasites, telles que des gigues, lors de la commutation de phase. Uniquement des transitoires de commutation apparaissent, mais à une basse fréquence, ce qui ne pénalise pas la démodulation des données.

Comme le démultiplexeur 13 fournit cycliquement pendant un laps de temps 1/(2·fs) les signaux intermédiaires en phase Im et pendant un laps de temps 1/(2·fs) successif les signaux intermédiaires en quadrature Qm, il subsiste des "trous" sans signaux dans chaque branche de démodulation à la sortie du démultiplexeur. Dans cette condition, cela réduit la taille et la consommation du récepteur par rapport à un récepteur à deux branches de conversion traditionnel, mais également réduit d'environ 3 dB la sensibilité du récepteur, ce qui n'est pas pénalisant. Cependant de manière à permettre une démodulation des données en continu dans l'étage de démodulation 20, il est prévu d'utiliser, dans chaque branche, des premier et second circuits dénommés circuits magiques 14 et 15.

Un premier circuit magique 14 reçoit les signaux intermédiaires sélectionnés en phase Im, alors qu'un second circuit magique 15 reçoit les signaux intermédiaires sélectionnés en quadrature Qm. Chaque circuit magique a pour tâche de reconstruire les signaux en phase Im ou en quadrature Qm pendant les instants de pause de chaque branche en fonction du signal de sélection de phase SEL. Chaque circuit magique 14, 15 prend ainsi l'image des signaux reçus pour les reconstruire sur cette base pendant toute la durée de la pause avant que de nouveaux signaux en phase Im ou en quadrature Qm soient fournis par l'intermédiaire du démultiplexeur commandé par le signal de sélection de phase SEL. Grâce à ces circuits magiques, les signaux intermédiaires sélectionnés en phase Im et en quadrature Qm sont fournis en continu, ce qui est essentiel, à un démodulateur de données en sortie de l'étage de démodulation.

Chaque circuit magique 14, 15 est avantageusement composé d'une pseudo boucle à verrouillage de phase numérique (PLL) bien connue, qui génère en continu les signaux en phase Im ou en quadrature Qm représentant les signaux reçus avant sélection de l'autre branche. Dans la phase d'acquisition des signaux intermédiaires sélectionnés Im ou Qm en sortie du démultiplexeur 13 par le signal de sélection SEL, un compteur du circuit magique, qui est cadencé par une horloge du récepteur, mesure la période moyenne desdits signaux intermédiaires reçus avant coupure. La fréquence d'horloge peut être par exemple de l'ordre de 26 MHz. Sur la base de cette mesure, la boucle à verrouillage de phase numérique (synthétiseur NCO), qui est cadencée par l'horloge du récepteur, est réglée en fréquence une seule fois à chaque commutation et mise en fonction avec une phase égale à la phase moyenne mesurée. Un registre de chaque boucle à verrouillage de phase numérique peut ainsi mémoriser la phase et la fréquence des signaux reçus de manière à permettre la génération de signaux images des signaux reçus avant les instants de pause ou coupure. Le démodulateur 12 reçoit ainsi en continu les signaux intermédiaires en phase Im et en quadrature Qm.

Le démodulateur 12 de l'étage de démodulation 20 peut être une simple bascule du type D, qui reçoit en entrée D par exemple les signaux intermédiaires en phase Im et est cadencée à sa borne de cadencement CLK par les signaux intermédiaires en quadrature Qm. Avec cette bascule et fonction de l'état de chaque bit de données, la sortie de la bascule est à un niveau 1 ou à un niveau 0 dans les signaux de données D_{OUT}.

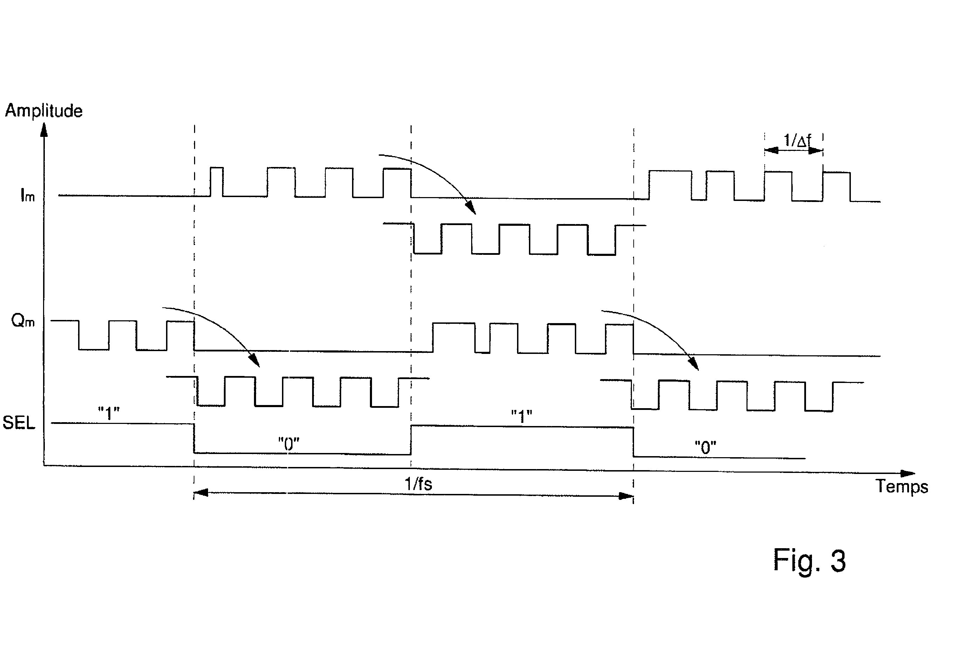

La figure 3 représente de manière simplifiée un graphique temporel des signaux intermédiaires filtrés en phase Im et en quadrature Qm avec le signal de sélection de phase SEL à travers l'étage de démodulation du récepteur de signaux radiofréquences FSK. On remarque que dans chaque demi-période d'un cycle de commutation 1/fs, il subsiste des "trous" dans les signaux Im ou Qm, mais grâce à chaque circuit magique, l'image de ces signaux est reconstruite comme indiquée par chaque flèche en dessous des signaux Im et Qm. Les signaux intermédiaires en phase Im et Qm en sortie des circuits magiques sont donc sans interruption pour une démodulation en continu des données dans le démodulateur.

La seconde variante de réalisation du récepteur de signaux radiofréquences FSK 1 est représentée à la figure 2b. La seule différence de cette seconde variante par rapport à la première variante du récepteur de la figure 2a décrite ci-devant, est que le circuit déphaseur 26 est placé sur le chemin des signaux radiofréquences FSK captés par l'antenne 2. Ce circuit déphaseur 26 est disposé entre l'amplificateur LNA 3 et l'unique mélangeur 4. Ce circuit déphaseur est cadencé par le signal de sélection de phase SEL de manière à produire alternativement dans chaque cycle successif de commutation de phase, des signaux radiofréquences FSK en phase et des signaux radiofréquences FSK en quadrature. Ces signaux FSK en phase et en quadrature sont convertis en fréquence dans le mélangeur 4 par des signaux oscillants LO fournis par l'oscillateur local 7 afin de produire des signaux intermédiaires INT en bande de base. Ces signaux intermédiaires INT comprennent alternativement des signaux intermédiaires en phase et des signaux intermédiaires en quadrature. Ces signaux intermédiaires INT sont traités dans l'étage de démodulation 20 d'une manière équivalente à la première variante de réalisation du récepteur 1 décrite ci-devant en référence à la figure 2a.

Pour les première et seconde variantes de réalisation du récepteur de signaux radiofréquences FSK des figures 2a et 2b, le signal de sélection de phase SEL peut être avantageusement obtenu par un diviseur de fréquence programmable ou multi-mode relié à un oscillateur à quartz de référence de l'oscillateur local 7. La fréquence d'horloge de cadencement des circuits magiques 14 et 15 peut également être fournie par l'oscillateur à quartz de l'oscillateur local. Cet oscillateur local 7 peut être un synthétiseur de fréquence traditionnel. Ce synthétiseur comprend l'oscillateur à quartz de référence, qui génère une fréquence de référence pour un détecteur de phase et fréquence. Ceci permet de commander dans la boucle à verrouillage de phase du synthétiseur un oscillateur commandé en tension VCO, qui génère les signaux oscillants LO pour l'opération de mélange dans l'unique mélangeur 4. Un diviseur programmable entre la sortie de l'oscillateur VCO et le détecteur de phase et fréquence permet de déterminer la fréquence f₀ des signaux oscillants LO.

Grâce à la faible fréquence du cycle de commutation fs du signal de sélection de phase SEL, il est possible d'avoir une structure standard du récepteur de signaux FSK. Une seule branche est utilisée avec un unique mélangeur 4 de conversion de fréquence, ce qui réduit la consommation électrique par rapport à un récepteur de l'état de la technique. De plus comme indiqué précédemment, la sensibilité d'un tel récepteur est, à -3 dB près, sensiblement équivalente à celle d'un récepteur traditionnel à deux branches de conversion de fréquence des signaux FSK.

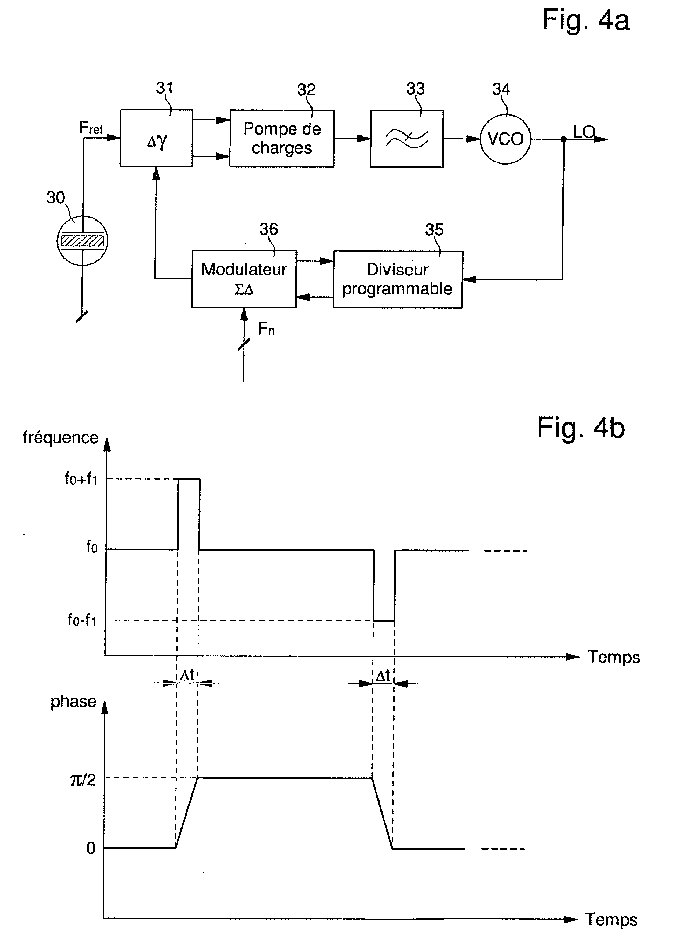

La figure 4a décrit une première forme d'exécution simplifiée d'un oscillateur local, qui comprend intégré le circuit déphaseur pour le récepteur de signaux radiofréquences FSK de la figure 2a. Cet oscillateur local est de préférence un synthétiseur de fréquence qui agit par synthèse sigma-delta.

Ce synthétiseur de fréquence comprend donc l'oscillateur de référence 30 à quartz susceptible de fournir un signal de référence à fréquence Fref à un détecteur de phase et fréquence 31 dans une boucle à verrouillage de phase. La fréquence Fref peut être de l'ordre de 26 MHz. Dans la boucle à verrouillage de phase, ce détecteur de phase et fréquence 31 reçoit également des signaux à fréquence divisée. Ces signaux à fréquence divisée proviennent des signaux oscillants LO fournis en sortie d'un oscillateur commandé en tension VCO 34, qui sont divisés en fréquence par un diviseur programmable 35. Le facteur de division du diviseur 35 est programmé par un modulateur sigma-delta 36 traditionnel.

Ce synthétiseur de fréquence comprend encore une pompe de charges 32, qui reçoit les signaux de comparaison du détecteur de phase et fréquence, un filtre passe-bas 33 pour filtrer les signaux fournis en sortie de la pompe de charges, et l'oscillateur commandé en tension VCO 34. Cet oscillateur commandé en tension 34 est commandé par une tension déterminée fournie en sortie du filtre passe-bas 33, afin qu'il génère des signaux oscillants à fréquence déterminée. Cette fréquence déterminée peut être par exemple la fréquence f₀, qui correspond à la fréquence porteuse des signaux radiofréquences FSK à capter.

Cette première forme d'exécution du synthétiseur de fréquence permet en fonction d'un mot binaire Fn de programmation du modulateur sigma-delta 36 de générer les signaux oscillants LO à fréquence déterminée f₀ en sortie du synthétiseur de fréquence. Suivant une programmation particulière du modulateur sigma-delta 36 dans le temps, il est possible d'opérer un déphasage de 90° afin de passer de signaux oscillants en phase à des signaux en quadrature en sortie de l'oscillateur commandé en tension 34. Un déphasage inverse de -90° peut également être effectué pour passer de signaux oscillants en quadrature à des signaux oscillants en phase.

Comme montré également par le graphique simplifié de la figure 4b, pour le passage de signaux oscillants en phase à des signaux oscillants en quadrature, le modulateur 36 est programmé par un premier mot binaire Fn particulier. En fonction de ce premier mot binaire, la fréquence souhaitée des signaux oscillants LO correspond à l'addition de la fréquence f₀ et d'une faible fréquence complémentaire f₁ pendant une période Δt. Au terme de cette période Δt, le modulateur est à nouveau programmé par un mot binaire Fn de base pour obtenir à nouveau la fréquence f₀ dans les signaux oscillants LO. Pendant cette période Δt, un déphasage de 90° a été effectué de manière à passer de signaux oscillants en phase à des signaux oscillants en quadrature en sortie de l'oscillateur VCO 34. Pour effectuer cette commutation de phase, le signal de sélection de phase non représenté commande lors de son passage de l'état "0" à l'état "1" par exemple, la fourniture du premier mot binaire Fn au modulateur 36.

Pour le passage de signaux oscillants en quadrature à des signaux oscillants en phase, le modulateur est programmé par un second mot binaire Fn particulier. En fonction de ce second mot binaire, la fréquence souhaitée des signaux oscillants correspond à la faible fréquence complémentaire f₁, qui est soustraite de la fréquence f₀ pendant une période Δt. Au terme de cette période Δt, le modulateur est à nouveau programmé par un mot binaire Fn de base pour obtenir à nouveau la fréquence f₀ dans les signaux oscillants LO. Pendant cette période Δt, le déphasage des signaux oscillants passe à nouveau de 90° à 0° pour fournir en sortie de l'oscillateur commandé en tension des signaux oscillants en phase. Pour effectuer cette commutation de phase, le signal de sélection de phase non représenté commande lors de son passage de l'état "1" à l'état "0" par exemple, la fourniture du second mot binaire Fn au modulateur 36. Comme cette méthode de déphasage est bien connue, aucun détail supplémentaire ne sera donné. II est juste à noter qu'avec un tel synthétiseur de fréquence, le circuit déphaseur est avantageusement intégré dans l'oscillateur local.

II est également à noter qu'au lieu de fournir des premier et second mots binaires Fn au modulateur sigma-delta 36 pendant des courtes périodes Δt, il peut aussi être envisagé de placer un multiplexeur en sortie du synthétiseur. Ce multiplexeur non représenté reçoit en entrée des signaux oscillants en phase et en quadrature fournis par un oscillateur commandé en tension du type différentiel. Ce multiplexeur peut avantageusement être commandé par le signal de sélection de phase SEL pour fournir à sa sortie soit les signaux oscillants en phase, soit les signaux oscillants en quadrature.

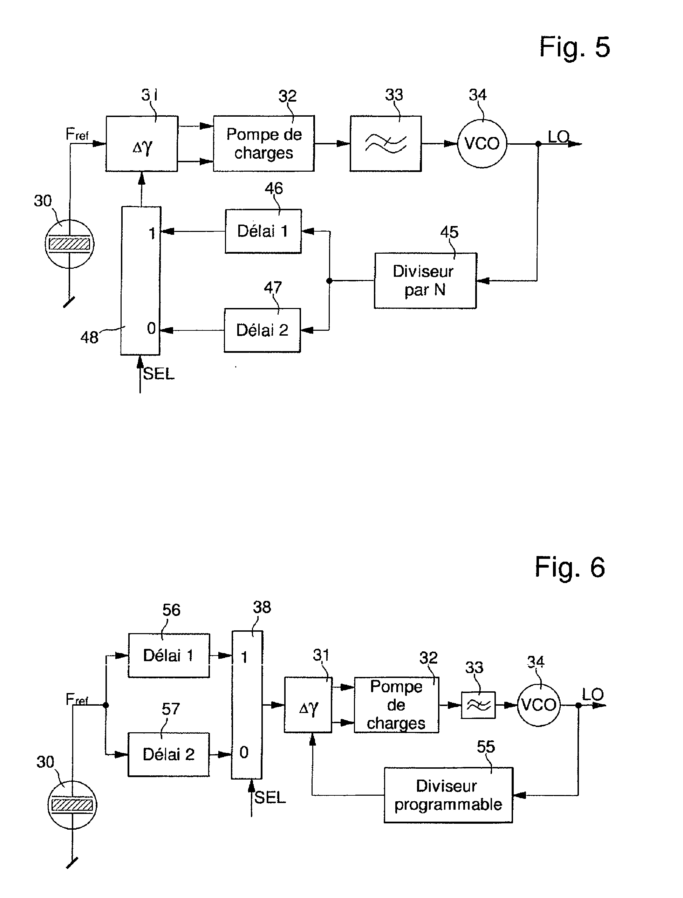

La figure 5 décrit une seconde forme d'exécution simplifiée d'un oscillateur local, qui comprend intégré le circuit déphaseur pour le récepteur de signaux radiofréquences FSK de la figure 2a. Cet oscillateur local est préférentiellement un synthétiseur de fréquence à deux ensembles à retard 46 et 47 commutables par le signal de sélection de phase SEL. Comme plusieurs éléments du synthétiseur de fréquence de cette seconde forme d'exécution sont identiques à ceux décrits en référence à la figure 4a, il ne sera pas répété la description des mêmes éléments par simplification.

La différence de cette seconde forme d'exécution du synthétiseur de fréquence par rapport à la première forme d'exécution décrite ci-dessus en référence à la figure 4a, est donc qu'en lieu et place du modulateur sigma-delta, il est utilisé deux ensembles à retard commutables 46 et 47. Les signaux oscillants LO générés par l'oscillateur commandé en tension VCO 34 sont divisés dans un diviseur par N standard 45 ou un diviseur multi-mode à choix, avant que les signaux divisés soient dirigés à l'entrée du premier ensemble à retard 46 et du second ensemble à retard 47. La sortie de chaque ensemble à retard est reliée à l'entrée d'un multiplexeur 48, dont les signaux divisés en sortie du multiplexeur 48 sont fournis au détecteur de phase et fréquence 31. Une sélection des signaux divisés à fournir en sortie est opérée dans le multiplexeur 48 par le signal de sélection de phase SEL. Pendant une première demi-période d'un cycle de commutation de phase 1/fs, les signaux divisés "en phase" sont fournis au détecteur 31 pour opérer une comparaison avec le signal de référence Fref. Pendant une seconde demi-période successive du cycle de commutation de phase, les signaux divisés "en quadrature" sont fournis au détecteur 31. Ainsi dans chaque cycle de commutation, l'oscillateur commandé en tension VCO 34 génère en sortie successivement et alternativement des signaux oscillants LO en phase et des signaux oscillants en quadrature.

Chaque ensemble à retard 46, 47 peut être réalisé par mise en série d'un inverseur et d'une porte de transmission à délai commandé en tension. Cette tension est asservie pour créer le retard nécessaire à fournir au détecteur 31. L'asservissement du retard peut être réalisé en montant en série m inverseurs suivis de m portes de transmission à tension de commande variable. Cela constitue ainsi un oscillateur en anneau verrouillé en phase sur une fréquence de référence Fref par exemple générée par l'oscillateur à quartz 30. Dans le second asservissement du retard 47, l'oscillateur en anneau comprend notamment n inverseurs, suivis de n portes de transmission à tension de commande variable, qui sont verrouillés en phase sur la fréquence de référence Fref. La différence de délai entre les éléments des deux ensembles à retard, est établie précisément par la formule ((1/Fref)/m)-((1/Fref)/n). Dans le cas où m est égal à 37 et n est égal à 31 avec une fréquence de référence Fref égale à 26 MHz, la différence de délai est d'environ 100 ps. Dans le cas d'une fréquence f₀ à 2.45 GHz dans les signaux oscillants LO, la différence temporelle des signaux divisés fournis par les ensembles à retard est donc bien d'environ 100 ps.

La figure 6 décrit une troisième forme d'exécution simplifiée d'un oscillateur local, qui comprend intégré le circuit déphaseur pour le récepteur de signaux radiofréquences FSK de la figure 2a. Cet oscillateur local est préférentiellement un synthétiseur de fréquence à deux ensembles à retard 56 et 57 commutables par le signal de sélection de phase SEL. Comme plusieurs éléments du synthétiseur de fréquence de cette troisième forme d'exécution sont identiques à ceux décrits en référence aux figures 4a et 5, il ne sera pas répété la description des mêmes éléments par simplification.

Cette troisième forme d'exécution du synthétiseur de fréquence est très similaire à la seconde forme d'exécution présentée à la figure 5. Dans cette troisième forme d'exécution, les deux ensembles à retard 56, 57 sont disposés cette fois entre l'oscillateur de référence 30 et le détecteur de phase et fréquence 31. Les signaux oscillants LO générés par l'oscillateur commandé en tension VCO 34 sont uniquement divisés par le diviseur programmable ou multi-mode 55. Ce diviseur programmable 55 fournit des signaux divisés au détecteur de phase et fréquence 31 dans la boucle à verrouillage de phase.

Chaque ensemble à retard 56 et 57 reçoit le signal de référence Fref. La sortie de chaque ensemble à retard est reliée à l'entrée d'un multiplexeur 58, pour que le signal de référence Fref en sortie du multiplexeur 58 soit fourni au détecteur de phase et fréquence 31. Une sélection d'un des ensembles à retard, qui doit fournir en sortie le signal de référence au détecteur 31, est opérée dans le multiplexeur 58 par le signal de sélection de phase SEL. Pendant une première demi-période d'un cycle de commutation de phase 1/fs, le signal de référence "en phase" est fourni au détecteur 31 pour opérer une comparaison avec les signaux divisés du diviseur programmable 55. Pendant une seconde demi-période successive du cycle de commutation de phase, le signal de référence "en quadrature" est fourni au détecteur 31. Ainsi dans chaque cycle de commutation, l'oscillateur commandé en tension VCO 34 génère en sortie successivement et alternativement des signaux oscillants LO en phase et des signaux oscillants en quadrature.

Comme pour la seconde forme d'exécution, les ensembles à retard 56, 57 de cette troisième forme d'exécution sont similaires aux ensembles 46 et 47 décrits ci-devant. La description de ces ensembles à retard 56 et 57 ne sera donc par répétée.

II est encore à noter qu'en plus de toutes les formes d'exécution de synthétiseur de fréquence décrites en référence aux figures 4a, 5 et 6, il peut être envisagé que l'oscillateur commandé en tension VCO fournisse tout d'abord des signaux oscillants en phase ou en quadrature, dont la fréquence doit encore être adaptée à celle des signaux radiofréquences à capter. Dans une première variante, l'oscillateur commandé en tension 34 peut générer des signaux oscillants, dont la fréquence est la moitié de la fréquence f₀ des signaux radiofréquences FSK. Dans ces conditions, il est nécessaire de placer un doubleur en sortie de l'oscillateur VCO. Avec un déphasage de 45° en sortie de l'oscillateur VCO, un déphasage de 90° peut être obtenu en sortie du doubleur. Dans une seconde variante, l'oscillateur commandé en tension peut générer des signaux oscillants, dont la fréquence est le double de celle des signaux radiofréquences FSK. Dans ces conditions, il est prévu un diviseur par deux en sortie de l'oscillateur VCO. Avec un déphasage de 180° en sortie de l'oscillateur VCO, cela implique en déphasage de 90° en sortie du diviseur par deux.

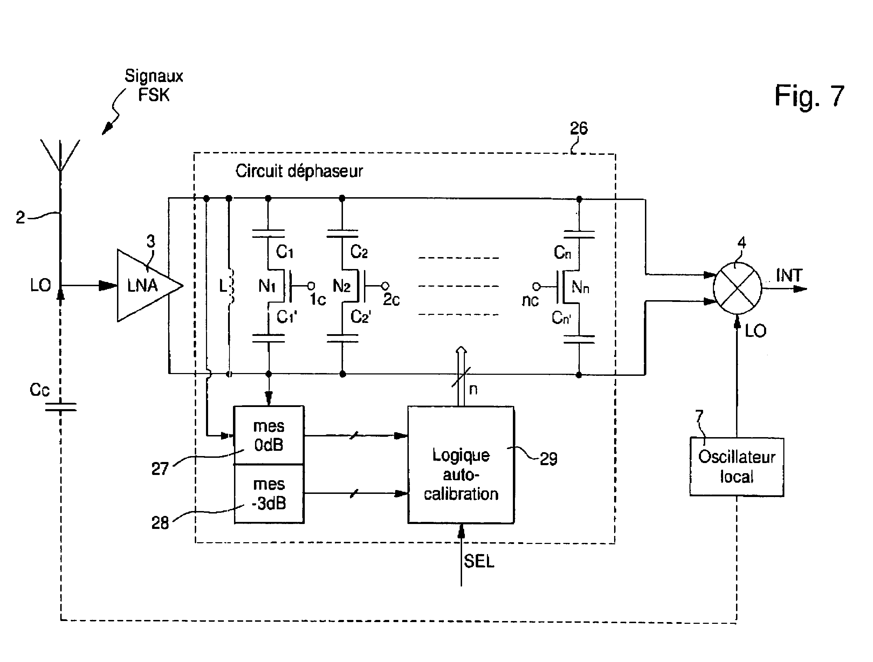

La figure 7 représente une forme d'exécution d'un circuit déphaseur 26, qui est disposé en entrée du récepteur de signaux radiofréquences FSK dans la seconde variante de réalisation présentée à la figure 2b. Uniquement la partie d'entrée du récepteur est présentée sur cette figure 7.

Le circuit déphaseur 26 comprend principalement un réseau à condensateurs commutables dans un montage en différentiel. Ce réseau à condensateurs commutables est placé en parallèle d'une inductance L et de l'antenne 2 par l'intermédiaire de l'amplificateur LNA 3 pour définir un circuit résonnant. Ce circuit résonnant doit être calibré comme expliqué ci-après pour que les signaux radiofréquences FSK captés par l'antenne soient alternativement dans chaque cycle successif de commutation de phase, des signaux radiofréquences FSK en phase et des signaux radiofréquences FSK en quadrature. Un signal de sélection de phase SEL est appliqué à ce circuit déphaseur 26 pour opérer la commutation de phase dans le circuit résonnant.

Comme ce réseau à condensateurs commutables est du type différentiel, l'amplificateur LNA 3 comprend deux sorties en opposition de phase. Le réseau à condensateurs commutables est donc relié aux deux sorties de l'amplificateur LNA 3, ainsi qu'à une double entrée de l'unique mélangeur 4. Le réseau à condensateurs commutables comprend donc n groupes capacitifs en parallèle, reliés aux deux lignes de sortie de l'amplificateur LNA 3. Chaque groupe capacitif comprend deux condensateurs C1, C1', C2, C2', Cn, Cn' et un interrupteur, tel qu'un transistor MOS N1, N2, Nn monté en série entre les deux condensateurs. De préférence, les transistors MOS sont du type NMOS. La valeur capacitive de chaque paire de condensateurs du réseau peut être pondérée par puissance de 2. Pour sélectionner telle ou telle paire de condensateurs d'un groupe capacitif à placer en parallèle de l'inductance L, les transistors NMOS N1, N2 à Nn sont commandés sur leur grille 1c, 2c à nc pour les rendre conducteurs par un mot de configuration à n bits, qui est fourni par une logique d'auto-calibration 29.

Dans une première phase, il est nécessaire de calibrer le circuit résonnant avec le réseau à condensateurs commutables. Pour ce faire, le circuit déphaseur commutable 26 est basé sur une propriété qui lie l'amplitude et la phase du circuit résonnant de type parallèle. II s'agit de déterminer précisément les deux points situés à -3dB du gain maximum à la résonnance. Ces deux points, qui sont à -3 dB du maximum de gain, possèdent une différence de phase d'exactement 90°. De plus, cette différence est relativement constante avec la fréquence dans les limites de la largeur de bande en fonction du facteur de qualité du récepteur de signaux radiofréquences FSK. II suffit de calibrer numériquement le circuit résonnant, qui est composé des groupes capacitifs, en fonction de deux mots binaires transmis alternativement par la logique d'auto-calibration 29 en fonction du signal de sélection de phase qui commande la logique d'auto-calibration. Grâce aux deux mots binaires alternativement transmis au réseau à condensateurs commutables, le circuit déphaseur fournit alternativement des signaux radiofréquences en phase et des signaux radiofréquences en quadrature au mélangeur 4.

Cette calibration passe par l'injection et la mesure des signaux oscillants LO de test. Ces signaux oscillants de test LO sont fournis par l'oscillateur local 7 à l'entrée de l'amplificateur LNA 3 notamment par l'intermédiaire d'un condensateur Cc. Bien entendu une fois que le réseau à condensateurs commutables a été calibré, l'oscillateur local ne fournit plus les signaux oscillants de test LO à l'entrée de l'amplificateur LNA 3. II peut être prévu pour cela un interrupteur non représenté entre la sortie de l'oscillateur local et l'entrée de l'amplificateur LNA 3 avant le condensateur Cc. D'autres signaux oscillants LO de l'oscillateur local 7, qui est de préférence un synthétiseur de fréquence, sont fournis directement au mélangeur 4 pour la conversion de fréquence des signaux radiofréquences FSK en des signaux intermédiaires en bande de base INT. Pour une telle conversion directe, la fréquence de ces signaux oscillants est établie pour être identique à la fréquence f₀ des signaux radiofréquences FSK à capter.

Pour effectuer la mesure d'amplitude, il est prévu tout d'abord un premier circuit de mesure 27, qui est relié aux deux sorties de l'amplificateur LNA 3 et au réseau à condensateurs commutables. Ce premier circuit de mesure 27 a pour tâche de déterminer le point de gain maximum par l'intermédiaire de la logique d'auto-calibration 29. Cette logique d'auto-calibration de manière successive rend conducteur un certain nombre de transistors NMOS pour placer une ou plusieurs paires de condensateurs des groupes capacitifs en parallèle jusqu'à ce que le premier circuit de mesure détermine le gain maximum. Une fois que le gain maximum a été déterminé, un second circuit de mesure 28, en parallèle du premier circuit de mesure 27, reçoit les signaux atténués de -3 dB par exemple à l'aide d'un atténuateur, tel qu'un diviseur capacitif. Une comparaison est effectuée entre les mesures du second circuit de mesure et la mesure du premier circuit de mesure. Ceci permet de déterminer les deux points à -3dB du gain maximum, afin que la logique d'autocalibration 29 fournisse successivement les deux mots binaires de calibration au réseau à condensateurs commutables.

II est à noter qu'au moins le premier circuit de mesure 27 peut être configuré pour effectuer une mesure d'amplitude de type Bessel améliorée, qui est bien connue. Pour ce faire, il est utilisé la caractéristique exponentielle d'un transistor MOS en faible inversion avec un couplage des signaux radiofréquences FSK à mesurer. L'exponentielle d'une fonction sinus est la fonction de Bessel d'ordre zéro, dont la valeur en tension de sortie décroît quand l'amplitude des signaux radiofréquences FSK couplés croît. Pour obtenir une plus grande variation en fonction de l'amplitude, un détecteur de Bessel amélioré bien connu couple deux comportements similaires en plaçant en série deux transistors complémentaires NMOS et PMOS et une source de courant entre deux bornes d'une source de tension d'alimentation. Un signal en tension de sortie est fourni au niveau de la source du transistor PMOS, qui est reliée à la source de courant. Ce détecteur est d'une configuration différentielle de manière à bénéficier de la masse virtuelle associée.

Le récepteur de signaux radiofréquences FSK 1 décrit ci-dessus comprend un circuit intégré dans lequel la majeure partie des composants du récepteur est intégrée. Ce circuit intégré peut être réalisé dans une technologie CMOS à 0.18 µm par exemple.

A partir de la description qui vient d'être faite, plusieurs variantes du récepteur de signaux radiofréquences FSK peuvent être conçues par l'homme du métier sans sortir du cadre de l'invention définie par les revendications. II peut être prévu de disposer le circuit déphaseur entre l'antenne et l'amplificateur à faible bruit. Le réseau à condensateurs commutables du circuit déphaseur peut être composé de groupes capacitifs avec un seul condensateur en série avec un transistor bipolaire ou MOS, qui sont reliés entre une seule ligne de sortie de l'amplificateur LNA et une borne de masse. Ce réseau à condensateurs commutables peut être relié également directement à l'antenne.

## Revendications

1. Récepteur (1) de signaux radiofréquences à modulation FSK à faible débit, ledit récepteur basse puissance comprenant :
- une antenne (2) de réception de signaux radiofréquences FSK,
- un amplificateur à faible bruit (3) pour amplifier et filtrer les signaux captés par l'antenne,
- un oscillateur local (7) pour fournir des signaux oscillants (LO) ayant une fréquence sensiblement identique à la fréquence porteuse des signaux radiofréquences FSK à capter,
- un circuit déphaseur (16, 26) pour opérer un déphasage de 0° à 90° et inversement des signaux oscillants (LO) ou des signaux radiofréquences FSK captés, dans chaque demi-période d'un cycle de commutation de phase (1/fs), afin de générer alternativement et successivement des signaux oscillants en phase et en quadrature, ou des signaux radiofréquences FSK captés en phase et en quadrature,
- un mélangeur (4) pour mélanger successivement les signaux oscillants en phase et en quadrature avec les signaux radiofréquences FSK captés filtrés et amplifiés, ou les signaux oscillants (LO) avec les signaux radiofréquences FSK en phase et en quadrature, afin de générer alternativement des signaux intermédiaires en bande de base en phase et en quadrature (INT),
- au moins un filtre passe-bas (8) pour filtrer les signaux intermédiaires en phase et en quadrature, et
- un étage de démodulation (20) pour démoduler les données (D_{OUT}) des signaux intermédiaires filtrés en phase et en quadrature (im, Qm),
**caractérisé en ce que** le récepteur est agencé pour que le circuit déphaseur (16, 26) soit commuté par un signal de sélection de phase (SEL) à une fréquence (fs) du cycle de commutation de phase inférieure à la déviation de fréquence (Δf) des données modulées dans les signaux radiofréquences FSK, et supérieure à la fréquence du débit des données.

2. Récepteur (1) selon la revendication 1, **caractérisé en ce que** le récepteur est agencé pour que le circuit déphaseur (16, 26) soit commuté par le signal de sélection de phase à une fréquence (fs) du cycle de commutation de phase entre 10 et 20 fois inférieure à la déviation de fréquence (Δf) des données modulées dans les signaux radiofréquences FSK, et entre 10 et 20 fois supérieure à la fréquence du débit des données.

3. Récepteur (1) selon l'une des revendications précédentes, **caractérisé en ce que** l'étage de démodulation (20) comprend un démultiplexeur (13) en entrée pour recevoir les signaux intermédiaires filtrés en phase et en quadrature, ledit démultiplexeur (13) étant commandé par le signal de sélection de phase (SEL), afin de fournir cycliquement à une première sortie les signaux intermédiaires filtrés en phase (Im) et à une seconde sortie les signaux intermédiaires filtrés en quadrature (Qm), et un démodulateur de données (12) recevant les signaux intermédiaires filtrés en phase et en quadrature du démultiplexeur (13), pour fournir des signaux de données (D_{OUT}).

4. Récepteur (1) selon la revendication 3, **caractérisé en ce que** l'étage de démodulation (20) comprend un premier circuit magique (14) entre la première sortie du démultiplexeur (13) et le démodulateur (12), et un second circuit magique (15) entre la seconde sortie du démultiplexeur (13) et le démodulateur (12), chaque circuit magique comprenant une pseudo boucle à verrouillage de phase numérique pour générer en continu les signaux en phase ou en quadrature de manière à reconstruire les signaux intermédiaires en phase ou en quadrature suite à une interruption due à la commutation de phase dans le démultiplexeur (13) par le signal de sélection de phase (SEL).

5. Récepteur (1) selon la revendication 4, **caractérisé en ce que** chaque circuit magique (14, 15) comprend un compteur pour mesurer la période des signaux intermédiaires filtrés sélectionnés, et une boucle à verrouillage de phase numérique, qui est réglée en fréquence une seule fois à chaque commutation avec une phase égale à la phase moyenne mesurée pendant la durée des signaux intermédiaires filtrés avant interruption due à la commutation de phase, afin de générer après interruption en continu des signaux intermédiaires en phase ou en quadrature à fournir au démodulateur (12) pour une démodulation en continu des signaux intermédiaire filtrés en phase et en quadrature des deux circuits magiques (14, 15).

6. Récepteur (1) selon l'une des revendications 3 à 5, **caractérisé en ce que** le démodulateur (12) est une bascule du type D pour recevoir à une entrée les signaux intermédiaires filtrés en phase (Im) ou en quadrature (Qm), et en étant cadencée par les autres signaux intermédiaires filtrés en quadrature ou en phase.

7. Récepteur (1) selon la revendication 1, **caractérisé en ce que** le circuit déphaseur (16) est intégré dans l'oscillateur local, qui est un synthétiseur de fréquence, afin de fournir alternativement et successivement des signaux oscillants en phase et en quadrature.

8. Récepteur (1) selon la revendication 7, **caractérisé en ce que** le synthétiseur de fréquence comprend un oscillateur de référence (30) à quartz susceptible de fournir un signal à fréquence de référence (Fref) à un détecteur de phase et fréquence (31) dans une boucle à verrouillage de phase, qui comprend une pompe de charge (32) reliée en sortie du détecteur (31), un filtre passe-bas (33), un oscillateur commandé en tension (34) recevant les signaux filtrés pour générer les signaux oscillants (LO), un diviseur programmable ou multi-mode (35) pou diviser en fréquence les signaux oscillants en liaison avec un modulateur sigma-delta (36), afin de fournir des signaux divisés au détecteur de phase et fréquence (31), le modulateur sigma-delta étant programmé par mots binaires (Fn) dans chaque cycle de commutation de phase, pour que l'oscillateur commandé en tension (34) fournisse alternativement et successivement des signaux oscillants en phase et en quadrature.

9. Récepteur (1) selon la revendication 7, **caractérisé en ce que** le synthétiseur de fréquence comprend un oscillateur de référence (30) à quartz susceptible de fournir un signal à fréquence de référence (Fref) à un détecteur de phase et fréquence (31) dans une boucle à verrouillage de phase, qui comprend une pompe de charge (32) reliée en sortie du détecteur (31), un filtre passe-bas (33), un oscillateur commandé en tension (34) recevant les signaux filtrés pour générer les signaux oscillants (LO), un diviseur par N ou multi-mode (45) pour diviser en fréquence les signaux oscillants (LO), deux ensembles à retard (46, 47) recevant les signaux divisés du diviseur (45) et un multiplexeur (48) relié aux deux ensembles à retard et commandé par le signal de sélection de phase (SEL), afin de fournir alternativement les signaux divisés à travers le premier ensemble à retard (46) et le second ensemble à retard (47) au détecteur de phase et fréquence (31) de manière que l'oscillateur commandé en tension (34) génère alternativement des signaux oscillants en phase et des signaux oscillants en quadrature.

10. Récepteur (1) selon la revendication 7, **caractérisé en ce que** le synthétiseur de fréquence comprend un oscillateur de référence (30) à quartz susceptible de fournir un signal à fréquence de référence (Fref) à deux ensembles à retard (56, 57), lesdits ensembles à retard étant reliés à un multiplexeur (58) commandé par le signal de sélection de phase (SEL) pour fournir alternativement le signal de référence à travers le premier ensemble à retard (56) et le second ensemble à retard (57) à un détecteur de phase et fréquence (31) dans une boucle à verrouillage de phase, qui comprend une pompe de charge (32) reliée en sortie du détecteur (31), un filtre passe-bas (33), un oscillateur commandé en tension (34) recevant les signaux filtrés pour générer alternativement des signaux oscillants en phase et en quadrature, un diviseur par N ou multi-mode (55) pour diviser en fréquence les signaux oscillants et fournir des signaux divisés au détecteur de phase et fréquence (31).

11. Récepteur (1) selon la revendication 1, **caractérisé en ce que** le circuit déphaseur (26) est disposé entre l'amplificateur LNA (3) et l'unique mélangeur (4).

12. Récepteur (1) selon la revendication 11, **caractérisé en ce que** le circuit déphaseur (26) comprend un réseau à condensateurs commutables monté en parallèle avec une inductance (L) et l'antenne (2) par l'intermédiaire de l'amplificateur LNA (3) pour définir un circuit résonnant, une logique d'auto-calibration (29) commandé par le signal de sélection de phase (SEL) pour fournir alternativement deux mots binaires de configuration au réseau à condensateurs commutables pour la fourniture des signaux radiofréquences en phase et des signaux radiofréquences en quadrature au mélangeur (4).

13. Récepteur (1) selon la revendication 12, **caractérisé en ce que** le circuit déphaseur (26) comprend un premier circuit de mesure (27) pour déterminer le point de gain maximum du circuit résonnant par l'intermédiaire de la logique d'auto-calibration (29), et un second circuit de mesure (28) pour déterminer deux points atténués de -3 dB par rapport au point de gain maximum, afin de configurer la logique d'auto-calibration, qui fournit alternativement et successivement deux mots de configuration au réseaux à condensateurs commutables pour opérer un déphasage de 0° à 90° et inversement des signaux radiofréquences FSK captés.

14. Récepteur (1) selon la revendication 13, **caractérisé en ce que** l'oscillateur local (7) est agencé pour fournir pendant une période de calibration des signaux oscillants en entrée de l'amplificateur LNA (3) pour calibrer le réseau à condensateurs commutables.

## Patentansprüche

1. Empfänger (1) für Hochfrequenzsignale mit FSK-Modulation mit niedriger Leistungsabgabe, wobei der Niedrigleistungsempfänger umfasst:
- eine Antenne (2) zum Empfangen von FSK-Hochfrequenzsignalen,
- einen Verstärker (3) mit niedrigem Rauschen, um die von der Antenne aufgefangenen Signale zu verstärken und zu filtern,
- einen Hilfsoszillator (7) zum Liefern von Oszillationssignalen (LO), die eine Frequenz besitzen, die im Wesentlichen gleich der Trägerfrequenz der aufzufangenden FSK-Hochfrequenzsignale ist,
- eine Phasenverschiebungsschaltung (16, 26), um eine Phasenverschiebung von 0° zu 90° und umgekehrt der Oszillationssignale (LO) oder der aufgefangenen FSK-Hochfrequenzsignale in jeder Halbperiode eines Phasenumschaltzyklus (1/fs) zu bewirken, um abwechselnd und nacheinander Inphase- und Quadratur-Oszillationssignale oder aufgefangene Inphase- und Quadratur-FSK-Hochfrequenzsignale zu erzeugen,
- einen Mischer (4) zum aufeinanderfolgenden Mischen der Inphase - und der Quadratur-Oszillationssignale mit den gefilterten und verstärkten FSK-Hochfrequenzsignalen oder der Oszillationssignale (LO) mit den Inphase- und den Quadratur-FSK-Hochfrequenzsignalen, um abwechselnd Inphase- und Quadratur-Zwischensignale (INT) im Grundband zu erzeugen,
- wenigstens ein Tiefpassfilter (8), um die Inphase- und die Quadratur-Zwischensignale zu filtern, und
- eine Demodulationsstufe (20), um die Daten (Dₒᵤₜ) der gefilterten Inphase- und Quadratur-Zwischensignale (Im, Qm) zu demodulieren,
**dadurch gekennzeichnet, dass** der Empfänger dafür ausgelegt ist, dass die Phasenverschiebungsschaltung (16, 26) durch ein Phasenauswahlsignal (SEL) mit einer Frequenz (fs) des Phasenumschaltzyklus, die kleiner als die Frequenzabweichung (Δf) der in den FSK-Hochfrequenzsignalen modulierten Daten und größer als die Frequenz des Datendurchsatzes ist, umgeschaltet wird.

2. Empfänger (1) nach Anspruch 1, **dadurch gekennzeichnet, dass** der Empfänger dafür ausgelegt ist, dass die Phasenverschiebungsschaltung (16, 26) durch das Phasenauswahlsignal mit einer Frequenz (fs) des Phasenumschaltzyklus, die zwischen 10 und 20 mal kleiner als die Frequenzabweichung (Δf) der in den FSK-Hochfrequenzsignalen modulierten Daten und zwischen 10 und 20 mal größer als die Frequenz des Datendurchsatzes ist, umgeschaltet wird.

3. Empfänger (1) nach einem der vorhergehenden Ansprüche, **dadurch gekennzeichnet, dass** die Demodulationsstufe (20) einen Demultiplexer (13) am Eingang, um die gefilterten Inphase- und Quadratur-Zwischensignale zu empfangen, wobei der Demultiplexer (13) durch das Phasenauswahlsignal (SEL) gesteuert wird, um an einem ersten Ausgang die gefilterten Inphase-Zwischensignale (Im) zyklisch zu liefern und an einem zweiten Ausgang die gefilterten Quadratur-Zwischensignale (Qm) zu liefern, und einen Datendemodulator (12), der die gefilterten Inphase- und Quadratur-Zwischensignale von dem Demultiplexer (13) empfängt, um die Datensignale (Dₒᵤₜ) zu liefern, umfasst.

4. Empfänger (1) nach Anspruch 3, **dadurch gekennzeichnet, dass** die Demodulationsstufe (20) eine erste magische Schaltung (14) zwischen dem ersten Ausgang des Demultiplexers (13) und dem Demodulator (12) sowie eine zweite magische Schaltung (15) zwischen dem zweiten Ausgang des Demultiplexers (13) und dem Demodulator (12) umfasst, wobei jede magische Schaltung eine digitale Pseudo-Phasenverriegelungsschleife enthält, um ununterbrochen Inphase- oder Quadratur-Signale zu erzeugen, derart, dass die Inphase- oder die Quadratur-Zwischensignale nach einer Unterbrechung aufgrund der Phasenumschaltung in dem Demultiplexer (13) durch das Phasenauswahlsignal (SEL) rekonstruiert werden.

5. Empfänger (1) nach Anspruch 4, **dadurch gekennzeichnet, dass** jede magische Schaltung (14, 15) einen Zähler, um die Periode ausgewählter gefilterter Zwischensignale zu messen, und eine digitale Phasenverriegelungsschleife enthält, deren Frequenz einmal bei jeder Umschaltung mit einer Phase, die gleich der gemessenen mittleren Phase während der Dauer der gefilterten Zwischensignale vor der Unterbrechung aufgrund der Phasenumschaltung ist, geregelt wird, um nach der Unterbrechung ununterbrochen Inphase- oder Quadratur-Zwischensignale zu erzeugen, die an den Demodulator (12) für eine ununterbrochene Demodulation der gefilterten Inphase- und Quadratur-Zwischensignale der zwei magischen Schaltungen (14, 15) geliefert werden sollen.

6. Empfänger (1) nach einem der Ansprüche 3 bis 5, **dadurch gekennzeichnet, dass** der Demodulator (12) ein D-Flipflop ist, um an einem Eingang die gefilterten Inphase-Zwischensignale (Im) oder die gefilterten Quadratur-Zwischensignale (Qm) zu empfangen, das durch die jeweils anderen der gefilterten Quadratur-Zwischensignale und der gefilterten Inphase-Zwischensignale getaktet wird.

7. Empfänger (1) nach Anspruch 1, **dadurch gekennzeichnet, dass** die Phasenverschiebungsschaltung (16) in den Hilfsoszillator integriert ist, der ein Frequenzsynthetisierer ist, um abwechselnd und nacheinander Inphase- und Quadratur-Oszillationssignale zu liefern.

8. Empfänger (1) nach Anspruch 7, **dadurch gekennzeichnet, dass** der Frequenzsynthetisierer einen Quarz-Referenzoszillator (30) umfasst, der an einen Phasen- und Frequenzdetektor (31) in einer Phasenverriegelungsschleife ein Referenzfrequenzsignal (Fref) liefern kann, die eine Ladungspumpe (32), die mit dem Ausgang des Detektors (31) verbunden ist, ein Tiefpassfilter (33), einen spannungsgesteuerten Oszillator (34), der die gefilterten Signale empfängt, um die Oszillationssignale (LO) zu erzeugen, und einen programmierbaren oder Multimoden-Teiler (35), um die Frequenz der Oszillationssignale in Verbindung mit einem Sigma-Delta-Modulator (36) zu teilen, um an den Phasen- und Frequenzdetektor (31) geteilte Signale zu liefern, umfasst, wobei der Sigma-Delta-Modulator durch binäre Wörter (Fn) in jedem Phasenumschaltzyklus programmiert wird, damit der spannungsgesteuerte Oszillator (34) abwechselnd und nacheinander Inphase- und Quadratur-Oszillationssignale liefert.

9. Empfänger (1) nach Anspruch 7, **dadurch gekennzeichnet, dass** der Frequenzsynthetisierer einen Quarz-Referenzoszillator (30) umfasst, der ein Referenzfrequenzsignal (Fref) an einen Phasen- und Frequenzdetektor (31) in einer Phasenverriegelungsschleife liefern kann, die eine Ladungspumpe (32), die mit dem Ausgang des Detektors (31) verbunden ist, ein Tiefpassfilter (33), einen spannungsgesteuerten Oszillator (34), der die gefilterten Signale empfängt, um die Oszillationssignale (LO) zu erzeugen, einen N-Teiler- oder Multimoden-Teiler (45), um die Frequenz der Oszillationssignale (LO) zu teilen, zwei Verzögerungsanordnungen (46, 47), die die geteilten Signale des Teilers (45) empfangen, und einen Multiplexer (48), der mit den zwei Verzögerungsanordnungen verbunden ist und durch das Phasenauswahlsignal (SEL) gesteuert wird, um abwechselnd die geteilten Signale durch die erste Verzögerungsanordnung (46) bzw. die zweite Verzögerungsanordnung (47) zu dem Phasen- und Frequenzdetektor (31) zu liefern, derart, dass der spannungsgesteuerte Oszillator (34) abwechselnd Inphase- und Quadratur-Oszillationssignale erzeugt, umfasst.

10. Empfänger (1) nach Anspruch 7, **dadurch gekennzeichnet, dass** der Frequenzsynthetisierer einen Quarz-Referenzoszillator (30) umfasst, der ein Referenzfrequenzsignal (Fref) an zwei Verzögerungsanordnungen (56, 57) liefern kann, wobei die Verzögerungsanordnungen mit einem Multiplexer (58) verbunden sind, der durch das Phasenauswahlsignal (SEL) gesteuert wird, um das Referenzsignal abwechselnd durch die erste Verzögerungsanordnung (56) bzw. die zweite Verzögerungsanordnung (57) zu einem Phasen- und Frequenzdetektor (31) in einer Phasenverriegelungsschleife zu liefern, die eine Ladungspumpe (32), die mit dem Ausgang des Detektors (31) verbunden ist, ein Tiefpassfilter (33), einen spannungsgesteuerten Oszillator (34), der die gefilterten Signale empfängt, um abwechselnd Inphase- und Quadratur-Oszillationssignale zu erzeugen, und einen N-Teiler oder Multimoden-Teiler (55), um die Frequenz der Oszillationssignale zu teilen und um die geteilten Signale zu dem Phasen- und Frequenzdetektor (31) zu liefern, umfasst.

11. Empfänger (1) nach Anspruch 1, **dadurch gekennzeichnet, dass** die Phasenverschiebungsschaltung (26) zwischen dem Verstärker LNA (3) und dem einzigen Mischer (4) angeordnet ist.

12. Empfänger (1) nach Anspruch 11, **dadurch gekennzeichnet, dass** die Phasenverschiebungsschaltung (26) ein Netzwerk von schaltbaren Kondensatoren, das zu einer Induktivität (L) und der Antenne (2) über den Verstärker LNA (3) parallel geschaltet ist, um eine Resonanzschaltung zu definieren, eine Autokalibrierungslogik (29), die durch das Phasenauswahlsignal (SEL) gesteuert wird, um abwechselnd zwei binäre Wörter für die Konfiguration an das Netzwerk von schaltbaren Kondensatoren zu liefern, um Inphase- und Quadratur-Hochfrequenzsignale an den Mischer (4) zu liefern, umfasst.

13. Empfänger (1) nach Anspruch 12, **dadurch gekennzeichnet, dass** die Phasenverschiebungsschaltung (26) eine erste Messschaltung (27) zum Bestimmen des Punkts mit maximaler Verstärkung der Resonanzschaltung über die Autokalibrierungslogik (29) und eine zweite Messschaltung (28) zum Bestimmen von zwei Punkten, die in Bezug auf den Punkt mit maximaler Verstärkung um -3 dB gedämpft sind, um die Autokalibrierungslogik zu konfigurieren, die abwechselnd und nacheinander zwei Konfigurationswörter an das Netzwerk von umschaltbaren Kondensatoren liefert, um eine Phasenverschiebung von 0° zu 90° und umgekehrt der aufgefangenen FSK-Hochfrequenzsignalen zu bewirken, umfasst.

14. Empfänger (1) nach Anspruch 13, **dadurch gekennzeichnet, dass** der Hilfsoszillator (7) dafür ausgelegt ist, während einer Kalibrierungsperiode Oszillationssignale an den Eingang des Verstärkers LNA (3) zu liefern, um das Netzwerk von umschaltbaren Kondensatoren zu kalibrieren.

## Claims

1. Low rate radio frequency signal receiver (1) for FSK modulation, said low power receiver including:
- an antenna (2) for receiving FSK radio frequency signals,
- a low noise amplifier (3) for amplifying and filtering the signals picked up by the antenna,
- a local oscillator (7) for supplying oscillating signals (LO) having a substantially identical frequency to the carrier frequency of the incoming FSK radio frequency signals,
- a phase shift circuit (16, 26) for performing a 0° to 90° phase shift and vice versa in the oscillating signals (LO) or the incoming FSK radio frequency signals, in each semi-period of a phase switching cycle (1/fs), so as to generate, alternately and successively, in-phase and quadrature oscillating signals, or in-phase and quadrature incoming FSK radio frequency signals,
- a mixer (4) for successively mixing the in-phase and quadrature signals with the filtered and amplified incoming FSK radio frequency signals, or the oscillating signals (LO) with the in-phase and quadrature FSK radio frequency signals, so as to generate alternately intermediate in-phase and quadrature baseband signals (INT),
- at least one low-pass filter (8) for filtering the intermediate in-phase and quadrature signals, and
- a demodulation stage (20) for demodulating the data (D_{OUT}) from the filtered intermediate in-phase and quadrature (Im, Qm) signals, **characterized in that** the receiver is arranged such that the phase shift circuit (16, 26) is switched by a phase selection signal (SEL) to a phase switching cycle frequency (fs) which is lower than the frequency deviation (Δf) of the modulated data in the FSK radio frequency signals and higher than the frequency of the data rate.

2. Receiver (1) according to claim 1, **characterized in that** the receiver is arranged such that the phase shift circuit (16, 26) is switched by the phase selection signal to a phase switching cycle frequency (fs) which is between 10 and 20 times lower than the frequency deviation (Δf) of the modulated data in the FSK radio frequency signals and between 10 and 20 times higher than the frequency of the data rate.

3. Receiver (1) according to any of the preceding claims, **characterized in that** the demodulation stage (20) input includes a demultiplexer (13) for receiving the filtered intermediate in-phase and quadrature signals, said demultiplexer (13) being controlled by the phase selection signal (SEL) so as to supply cyclically the filtered intermediate in-phase signals (Im) at a first output and the filtered intermediate quadrature signals (Qm) at a second output, and a data demodulator (12) receiving the filtered intermediate in-phase and quadrature signals from the demultiplexer (13), to supply data signals (D_{OUT}).

4. Receiver (1) according to claim 3, **characterized in that** the demodulation stage (20) includes a first magic circuit (14) between the first demultiplexer (13) output and the demodulator (12), and a second magic circuit (15) between the second demultiplexer (13) output and the demodulator (12), each magic circuit including a pseudo digital phase lock loop for continuously generating the in-phase or quadrature signals so as to reconstruct the intermediate in-phase or quadrature signals following any interruption due to phase switching in the demultiplexer (13) by the phase selection signal (SEL).

5. Receiver (1) according to claim 4, **characterized in that** each magic circuit (14, 15) includes a counter for measuring the period of the selected filtered intermediate signals, and a digital phase lock loop, which is frequency adjusted once per switching operation with a phase equal to the mean phase measured during the duration of the filtered intermediate signals prior to any interruption due to the phase switch, so as to generate continuously, after interruption, intermediate in-phase or quadrature signals to be supplied to the demodulator (12) for continuous demodulation of the filtered intermediate in-phase and quadrature signals from the two magic circuits (14, 15).

6. Receiver (1) according to any of claims 3 to 5, **characterized in that** the demodulator (12) is a D flip-flop for receiving the filtered intermediate in-phase (Im) or quadrature (Qm) signals at one input, and being clocked by the other filtered intermediate quadrature or in-phase signals.

7. Receiver (1) according to claim 1, **characterized in that** the phase shift circuit (16) is integrated in the local oscillator, which is a frequency synthesiser, so as to supply alternately and successively in-phase and quadrature oscillating signals.

8. Receiver (1) according to claim 7, **characterized in that** the frequency synthesiser includes a quartz reference oscillator (30) able to supply a reference frequency signal (Fref) to a phase and frequency detector (31) in a phase lock loop, which includes a charge pump (32) connected to the detector (31) output, a low-pass filter (33), a voltage controlled oscillator (34) receiving the filtered signals to generate the oscillating signals (LO), a programmable or multi-mode divider (35) for frequency dividing the oscillating signals in conjunction with a sigma-delta modulator (36), so as to supply divided signals to the phase and frequency detector (31), the sigma-delta modulator being programmed by binary words (Fn) in each phase switching cycle, such that the voltage controlled oscillator (34) alternately and successively supplies in-phase and quadrature oscillating signals.

9. Receiver (1) according to claim 7, **characterized in that** the frequency synthesiser includes a quartz reference oscillator (30) able to supply a reference frequency signal (Fref) to a phase and frequency detector (31) in a phase lock loop, which includes a charge pump (32) connected to the detector (31) output, a low-pass filter (33), a voltage controlled oscillator (34) receiving the filtered signals to generate the oscillating signals (LO), a multi-mode divider or divider-by-N (35) for frequency dividing the oscillating signals, two delay units (46, 47) receiving the divided signals from the divider (45) and a multiplexer (48) connected to the two delay units and controlled by the phase selection signal (SEL), so as to supply the divided signals alternately via the first delay unit (46) and the second delay unit (47) to the phase and frequency detector (31), such that the voltage controlled oscillator (34) alternately and successively generates in-phase and quadrature oscillating signals.

10. Receiver (1) according to claim 7, **characterized in that** the frequency synthesiser includes a quartz reference oscillator (30) able to supply a reference frequency signal (Fref) to two delay units (56, 57), said delay units being connected to a multiplexer (58) controlled by the phase selection signal (SEL) so as to supply the reference signal alternately via the first delay unit (56) and the second delay unit (57) to a phase and frequency detector (31) in a phase lock loop, which includes a charge pump (32) connected to the detector (31) output, a low-pass filter (33), a voltage controlled oscillator (34) receiving the filtered signals to generate alternately in-phase and quadrature oscillating signals, a divider-by-N or multi-mode divider (55) for frequency dividing the oscillating signals and supplying divided signals to the phase and frequency detector (31).

11. Receiver (1) according to claim, 1, **characterized in that** the phase shift circuit (26) is arranged between the LNA (3) and the single mixer (4).

12. Receiver (1) according to claim 11, **characterized in that** the phase shift circuit (26) includes an array of switchable capacitors arranged in parallel with an inductor (L) and the antenna (2) via the low noise amplifier (3) to define a resonant circuit, a self-calibrating logic circuit (29) controlled by the phase selection signal (SEL) for alternately supplying two binary configuration words to the array of switchable capacitors for the supply of in-phase radio frequency signals and quadrature radio frequency signals to the mixer (4).

13. Receiver (1) according to claim 12, **characterized in that** the phase shift circuit (26) includes a first measuring circuit (27) for determining the maximum gain point of the resonant circuit via the self-calibrating logic circuit (29), and a second measuring circuit (28) for determining two points attenuated by -3 dB relative to the maximum gain point, so as to configure the self-calibrating logic circuit, which alternately and successively supplies two configuration words to the array of switchable capacitors to perform a 0° to 90° phase shift, and vice versa, in the incoming FSK radio frequency signals.

14. Receiver (1) according to claim 13, **characterized in that** the local oscillator (7) is arranged for supplying oscillating signals to the low noise amplifier (3) input during a calibration period for calibrating the array of switchable capacitors.
